# EUROPEAN PATENT APPLICATION

(11) **EP 4 329 295 A1**
(43) Date of publication of application: **28.02.2024**
(21) Application number: 22192438.4
(22) Date of filing: 26.08.2022
(51) Int. Cl.: H04N 13/268

(54) **METHODS FOR PROCESSING DEPTH MAPS**

(71) Applicant: Koninklijke Philips N.V., 5656 AG Eindhoven (NL)
(72) Inventor: VAREKAMP, Christiaan, Eindhoven (NL)
(74) Representative: Philips Intellectual Property & Standards

(57) **Abstract**

A method is provided for processing a depth map for subsequent transmission. Depth regions in the depth map are identified, each of the depth regions defining a portion of the depth map. Ranges of depth values are determined for the depth regions and are further transmitted with the depth map. The ranges of depth values provide segmentation information of the depth regions in the depth map.

## Description

### FIELD OF THE INVENTION

The invention relates to processing depth maps. In particular, the invention relates to processing depth maps for subsequent transmission and use of the depth maps.

### BACKGROUND OF THE INVENTION

Multi-view imaging generally refers to the imaging of a scene together with obtaining a geometry of the scene. Typically, the geometry of the scene is captured with a depth map or similar. The depth of the scene together with the images of the scene can be used to synthesize novel images at new viewpoints. In other words, multi-view imaging can be used to view a scene from a chosen viewpoint instead of relying on the viewpoints of the cameras.

Multi-view imaging can comprise segmentation of the images with depth into separate patches. Image and depth patches are packed in an atlas. At the client side, the patches are first sorted in order of decreasing value of the z-axis for the virtual viewpoint (i.e. the viewpoint to be synthesized). The view synthesis algorithm then visits patches in this order and alternates between blending patches from different source views when these patches have similar depth and compositing the blended view over the previous composited output.

However, placing a per-frame variable number of patches with an irregular shape in an atlas breaks spatial and temporal consistency (thereby increasing bitrate) and increases the required number of pixels to store segmentation-related pixel data. An atlas typically consists of a background sprite texture with depth model and a variable number of rectangles where either transparency is used to encode the irregular patch shape inside the rectangle, or a separate segmentation map is stored in the atlas.

Additionally, the actual placement of patches for texture, depth and segmentation is like a puzzle which, due to bitrate and pixel area constraints, can become computationally demanding. While this may be less of a problem for professional broadcast applications with sufficient computational resources (e.g. using cloud computation), it will likely be a problem for telepresence applications with real-time, low-latency and low computational complexity requirements.

Lastly, most of the existing video standards do not support an alpha channel by default. The alpha channel provides transparency values for the pixels. Consequently, the segment shape would consume costly pixel space. If full view textures and full view images are directly placed into the image frame, the total number of views that can be transmitted will be limited. For example, encoders typically support 4K at 60Hz or 8K at 30Hz.

Thus, there is a need to improve segmentation methods used in multi-view imaging.

### SUMMARY OF THE INVENTION

The invention is defined by the claims.

According to examples in accordance with an aspect of the invention, there is provided a method for processing a depth map for subsequent transmission, the method comprising:
obtaining a depth map of a scene comprising a plurality of depth values;
identifying one or more depth regions in the depth map, wherein each of the one or more depth regions defines a portion of the depth map;
determining one or more ranges of depth values for the one or more depth regions; and
transmitting the depth map and the one or more ranges of depth values.

Improved multi-view frames can be rendered by using depth maps with segmented objects. However, the segmentation is typically done at the encoder before transmitting/broadcasting the multi-view information (e.g. texture and depth) and thus the multi-view information must include segmentation information in order for the decoder to make use of the segmentation during rendering.

It has been found that providing a range of depths for each object essentially provides a depth segmentation for the depth regions with a much lower bitrate requirement than, for example, providing a segmentation mask. This is because a segmentation mask (e.g. a segmentation map) does not need to be transmitted to provide segmentation information. The range of depth values enables the segmentation to be efficiently achieved at the decoder by comparing the depth values in the depth map with the transmitted ranges of depth values. When a depth value falls within one of the ranges, it can be assumed that the depth value corresponds the object from which the range of depth values was obtained.

Additionally, this provides multi-view information which can be encoded with a relatively lower computational cost.

The depth regions identified are continuous portions of the depth map and may comprise a part/portion of a whole object.

A depth region may comprise a region of the depth map with a relatively smooth depth gradient. The depth regions preferably consist of an object, or a portion thereof.

The ranges of depth values may be transmitted as two values indicating the maximum and the minimum depth value. Of course, other low bitrate methods of transmitting the ranges of depth values will be known. In particular, transmitting the range of depth values for the depth region (rather than identifying which pixels have which depths within the range) provides a low-data way to enable a segmentation function. Each range of depth values may correspond to a single depth region or there may be identical ranges shared between different depth regions. An indication of which depth region corresponds to which range of depth values may also be transmitted.

The method may further comprise defining a plurality of cells in the depth map, each cell corresponding to a portion of the depth map, wherein identifying one or more depth regions in the depth map comprises identifying one or more depth regions in each of the cells.

In addition, defining cells in the depth map corresponding to only a portion of the depth maps enables different portions of the depth map to be encoded separately. This can reduce the processing power needed to render a multi-view frame using the depth map by rendering each frame based on the corresponding number of ranges of depth values in each cell. For example, cells only containing background depth information (i.e. a single range for the whole cell) can be rendered accurately without using back-to-front synthesis whilst cells containing depth regions in more than one range are preferably rendered using back-to-front synthesis.

Preferably the depth map is divided into more than 15 cells.

Defining a plurality of cells in the depth map may comprise dividing the depth map into a grid of cells.

A grid of cells comprises a plurality of cells where the size of each cell is known. For example, the grid may comprise a plurality of equally shaped cells.

Knowing the size of each cell in the grid enables a more efficient coding and rendering of the multi-view frame using the depth map as the position of each cell is known and consistent between frames.

The method may further comprise transmitting the number of different ranges of depth values in each cell.

The depth interval data should be compressed and decompressed at low computational complexity (and latency) but should also not take too much space. In a binary data format, this can be achieved by indicating where the ranges of depth end for one cell and where they begin for another cell. An implementation for this is to have, for each cell, a 4-bit number (max. 16 intervals per cell) indicating how many intervals there are in the cell.

Only 16 or less distinct ranges of depth values may be transmitted.

This enables all indications of the ranges to be encoded in four bits. The ranges of depth values can be encoded, for example, using 16 bits each.

Assuming that a limited number (e.g., max 4, 10, 12 or 16) of ranges of depth appear inside a cell seems realistic. Using this information will help reduce bitrate at limited encode/decode complexity and hence also only adds a relatively small amount of latency.

The ranges of depth may vary between cells. For instance, on one side of the depth map there maybe objects close-by whereas on the other side there may be objects much further away. Thus, it may be advantageous to have specific ranges of depth for each cell. Having many cells per depth map and/or many depth intervals per cell can also give larger overhead for the depth ranges.

Identifying one or more depth regions may be based on determining a depth smoothness between the depth values of the depth map.

For example, first and/or second derivatives may be used to determine how fast depth changes as a function of image coordinates. Depth variation may be allowed inside a segment but only if the local change is smooth. When the change of depth from one pixel to the next increases, the chance that this change will result in covering/occlusion or uncovering/de-occlusion during rendering increases. Fundamentally, the depth smoothness is used to anticipate, from the depth map in the sensor space (i.e. as it was taken), where the corresponding real-world 3D object has a continuous surface.

The method may further comprise determining a mesh resolution based on the depth smoothness and transmitting the mesh resolution.

The invention also provides a method for synthesizing an image at a target viewpoint, the method comprising:
receiving at least one or more images and one or more depth maps of a scene;
receiving one or more ranges of depth values for at least one of the depth maps, wherein each range of depth values corresponds to one or more depth regions in one of the depth maps; and
processing at least one of the depth maps using the ranges of depth values, together with at least one of the images, to synthesize an image at the target viewpoint.

Processing the depth maps based on their range of depth values enables the rendering step to provide more accurate results as the depth regions now correspond to a range of depth values. As such, any errors in the depth values which may occur during rendering, for example due to warping and/or blending steps, can be rectified by the inclusion of the ranges of depth values.

Additionally, receiving the ranges of depth values for various depth regions enables the decoder side to process the depth data much more efficiently. For example, the range of values can be used to segment the depth maps as received. Having a depth segmentation for the depth maps can provide more accurate and efficient rendering of a multi-view frame. Vertex shaders and fragment shaders, typically used in rendering, can also make use of the ranges of depth values as will be explained below.

For example, processing at least one of the depth maps using the ranges of depth values may comprise modifying a position of the vertices in one or more meshes, generated based on the depth maps, to fit within the corresponding range of depth values and/or modifying the transparency values in a transparency map, generated based on the depth maps, based on the one or more ranges of depth values.

Processing at least one depth map may comprise rendering the depth regions in the one or more depth maps in a back-to-front depth order.

Processing at least one of the depth maps may comprise selecting a mesh for each range of depth values, applying the depth values of the one or more depth regions corresponding to each range of depth values, from the depth map, to the corresponding mesh, modifying the position of the vertices in each mesh to fit within the corresponding range of depth values and synthesizing the image at the target viewpoint using the images and the modified one or more meshes.

The depth variation inside a region (i.e. the range of depth) may be used to anticipate what mesh resolution will be used. In practice, generating the mesh means allocating memory for a given mesh size. Applying the depth values to the mesh then means calculating the 3D (x,y,z) mesh coordinates based on the incoming depth map (e.g. unprojecting depth to x,y,z coordinates).

For example, the meshes could be modified by the vertex shader during rendering. The ranges of depth values provide limits as to the position of the vertices in the mesh. This means that erroneous depth values which lie outside the range of depth values are modified to be within the range. As such, the accuracy of the meshes in increased.

This is advantageous as meshes can be used for warping operations in multi-view imaging. Thus, having accurate vertex coordinates in the mesh provides for more accurate warping to the target viewpoint. Of course, the ranges of depth values could also be used for other geometry-based shaders/operations in the graphics pipeline to modify the coordinates/geometry of the mesh, or similar.

Assuming a cell size of 128x128 pixels, various mesh sizes could be generated (e.g. store in memory a 128x128 size mesh, a 64x64 size mesh, a 32x32 size mesh a 16x16 size mesh and an 8x8 size mesh). Depending on the smoothness within a depth region, the depth region may use the lowest resolution mesh possible.

Depth map smoothness is a relative concept. Consider the depth map of a soccer ball. If the mesh is too course, texture rendering errors may become visible. Thus, although the soccer ball surface is rather smooth locally, the curvature is still substantial and may benefit from a higher resolution mesh. In another example, a book is oriented with the cover parallel to the depth image sensor. In this case, the entire cover can be perfectly represented by a single quad (or two triangles) in the mesh.

The mesh resolution to be used for a particular depth region may be received together with the range of depth values for the depth region.

The method may further comprise obtaining a mesh resolution based on a depth smoothness of each of the one or more depth maps, wherein selecting a mesh for each range of depth values is based on the mesh resolution.

Depth maps with a high depth smoothness (i.e. not much change between pixels) may not need as many vertices in the mesh, as the gradual depth changes can be accurately portrayed with a low number of vertices.

Preferably, the depth map is split into various cells and depth segmentation is performed for each cell at the encoder. The segments obtained from the segmentation are encoded using multiple intervals per cell (i.e. the ranges of depth values). Each interval isolates a region of the cell.

Each region, consisting of multiple depth pixels, has certain smoothness properties. For instance, a given region may consist of constant depth and hence a mesh consisting of a single quad (two triangles) would be sufficient. However, another region could contain a ridge or a curved surface. To represent that interval/region, a mesh with a higher spatial resolution would be needed. This enables portions (depth regions inside cells) of the depth map with high depth smoothness to use a mesh that has fewer vertices, thereby reducing computational complexity, whilst portions of the depth map with lower depth smoothness (higher variability in depth values) can use a mesh that has more vertices to improve the accuracy.

Processing at least one of the depth maps may comprise warping the one or more depth maps to a target viewpoint, generating a transparency map using the one or more warped depths maps and modifying the transparency values in the transparency map based on the one or more ranges of depth values, wherein synthesizing the image at the target viewpoint is based on using the one or more warped depth map and the transparency map.

The transparency map is typically used to set different pixels to transparent (or partially transparent) for different layers in a layered format based multi-view frame. The transparency values may be modified such that, when a depth value in the depth map is outside the corresponding range of depth values, the corresponding transparency value is set to 100% transparent. This enables erroneous depth values (e.g. caused by the warping and/or a blending step) to not be visible in the multi-view frame.

Additionally, the modification of the transparency map essentially segments out the foreground edge for objects in each layer as objects in different layers will likely have depth values outside the range of depth values corresponding to that layer.

For example, this can be achieved at the fragment shader of the graphics pipeline. Of course, other pixel-based operations may be adapted based on the ranges of depth values.

The method may further comprise receiving an indication of a number and shape of cells in a grid of cells defined for each of the one or more depth maps, wherein rendering the depth regions comprises separately rendering the depth regions for each cell.

The invention also provides a computer program comprising computer program code which, when executed on a processor, causes the processor to perform all of the steps of any (or all) of the afore-mentioned methods.

The invention also provides a processor configured to execute the afore-mentioned computer program code.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 illustrates an example partition with a grid plotted on a depth map;
Fig. 2 shows a single grid cell of a grid;
Fig. 3 shows the grid cell of Fig. 2 with labelled depth regions A to C;
Fig. 4 illustrates a one dimensional profile of the cell shown in Figs. 2 and 3 with corresponding ranges of depth values;
Fig. 5 shows a low resolution mesh drawn over the cell of Figs. 2 and 3;
Fig. 6 illustrates the mesh drawn for depth region A;
Fig. 7 illustrates the mesh drawn for depth region B;
Fig. 8 illustrates the mesh drawn for depth region C;
Fig. 9 shows a method for processing depth maps at an encoder; and
Fig. 10 shows a method for synthesizing an image at a target viewpoint.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a method for processing a depth map for subsequent transmission. Depth regions in the depth map are identified, each of the depth regions defining a portion of the depth map. Ranges of depth values are determined for the depth regions and are further transmitted with the depth map. The ranges of depth values provide segmentation information of the depth regions in the depth map.

In order to avoid extra pixel space requirements for the segmentation and to avoid computational complexity related to packing, it is proposed to send the segmentation information as a set of thresholds for the depth map instead of as a spatial map. In particular, the segmentation information is sent as ranges of depth values where each range of depth values contains one or more objects in the scene. Preferably, the set of thresholds is specified for a pre-defined region geometry (e.g., a rectangle). An approximate segmentation map can then be reconstructed after decoding by the client by applying the ranges of depth values to the depth map. The ranges of depth values can be sent as metadata. It is noted that the ranges of depth values may be referred to as thresholds or depth intervals.

The first step can be to create an upper bound for the segment size and shape by cutting the image domain into pieces of a regular grid. For example, assuming an image size of 1920x1080 pixels, grid cells of 128x128 pixels can be used.

In practice, both an image and a corresponding depth map may be used with the grid cells. As such, texture and depth can be defined for each grid cell and then used at the client side to synthesize a novel image at a target viewpoint. However, for the sake of defining segmentation information in this case, the processing of the depth maps is sufficient.

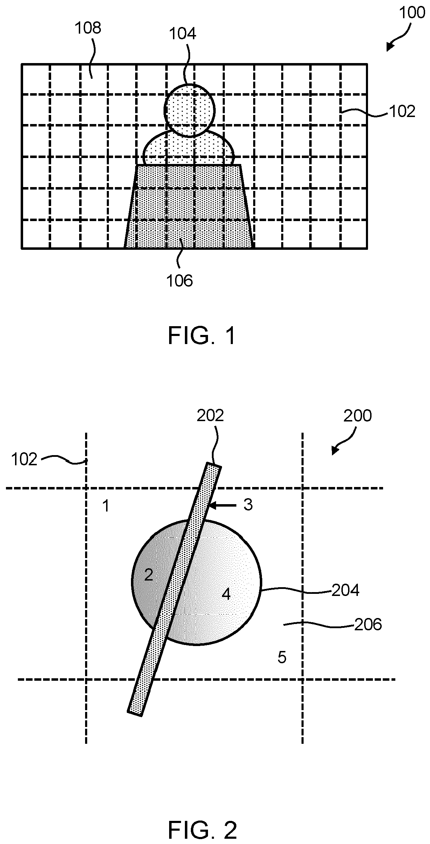

Fig. 1 illustrates an example partition with a grid 102 plotted on a depth map 100. The grid 102 defines a plurality of grid cells. It is noted that the depth map 100 may have a lower resolution than the corresponding image e.g., a factor 4 lower. Thus, the depth map may have a grid cell size of 32x32 pixels.

Fig. 1 shows a person 104 and a table 106, where the shading of the table 106, compared to the shading of the person 104, indicates the table 106 is closer to the viewpoint of the depth map 100 than the person 104. The background 108 is also shown without any shading. This may indicate that the depth values of the background 108 are uncertain or that the depth values are outside a pre-defined depth domain.

Most grid cells will not contain occlusion edges at all and a depth segmentation and back to front rendering approach may not be needed. However, some grid cells do contain occluding edges. For this case, the more distant objects (e.g. the background 108) need to be drawn first, during rendering, and the closer objects (e.g. the person 104 and the table 106) need to be composited over the drawn result in a later rendering step. Hence, in this case, having segmentation information during rendering is significantly advantageous as it enables a more accurate rendering of the edges between objects at different depths.

Using depth segmentation information in combination with back to front view synthesis with compositing also has a computational complexity benefit. At the client device, the depth map is typically converted to a regular mesh in the vertex shader. For the occluding edges, the mesh needs to have many vertices and since the mesh is regular, the vertex shader becomes computationally expensive. Potentially millions of vertices need to be rendered per view for each frame. In contrast, depth segmentation reduces the depth variation (inside a grid cell) and hence the number of vertices required for an occluding depth step. The foreground/background transition (i.e. the depth step) can be effectively transferred to the transparency maps of the grid cell. For many of the cells shown in Fig. 1, four mesh vertices, one for each corner of the grid cell, will suffice. This is particularly true for the cells only containing one object.

Fig. 2 shows a single grid cell 200 of the grid 102. In this case, three objects are shown at different depths. The closest object is the rod 202, then the circle 204 and lastly the background 206. The depth of the circle 204 varies from left to right. Using depth smoothness, connected regions can be labelled in the cell 200. In this case, the rod 202 separates the background 206 into connected regions 1 and 5 and the circle 204 into connected regions 2 and 4. The portion of the rod 202 within the cell 200 is labelled as connected region 3.

An important realization is that, for occlusion aware rendering at the client side, the regions do not necessarily need to be connected regions. In other words, it is important that pixels with the same or similar depth are blended across views, but composited per depth layer back to front. Consequently, connected regions 1 to 5 can be converted to depth regions A, B and C based on the range of depth values.

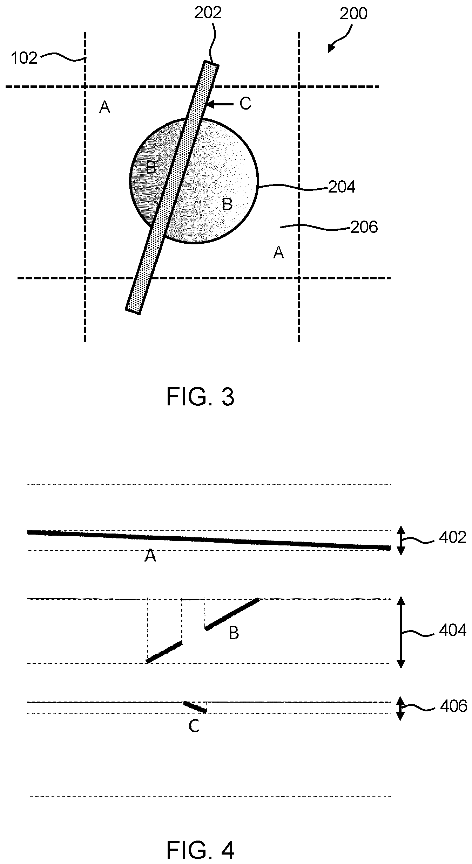

Fig. 3 shows the grid cell 200 of Fig. 2 with labelled depth regions A to C. As can be seen, the original connected region pair [1 , 5] and pair [2 , 4] can be represented by single depth region A and B respectively. Connected region 3 can be represented by the depth region C. This results in each pixel of the cell 200 receiving one of three depth class labels (A, B or C) where each class corresponds to a single depth range (minimum and maximum depth value).

Fig. 4 illustrates a one dimensional profile of the cell 200 shown in Figs. 2 and 3 with corresponding ranges of depth values. The ranges of depth values may be referred to as depth intervals. In this case, the depth region A (i.e. the background 206) corresponds to the depth interval 402, depth region B (i.e. the circle 204) corresponds to depth interval 404 and the depth region C (i.e. the rod 406) corresponds to depth interval 406. The depth intervals can be calculated by visiting all pixels in each depth region and keeping track of the minimum and maximum depth values in the depth map.

The depth intervals (i.e. the ranges of depth values) encode an approximate segmentation since they can be used to reconstruct class labels after decoding. This is discussed below.

One way to encode the depth intervals is to assume a pre-defined scan order over the grid cells and store, per grid cell, the number of depths classes and the corresponding depth intervals.

Note that the depth intervals are allowed to overlap. During rendering this may mean that the same pixel is rendered multiple times. However, since this will not happen very frequently, the encoder overhead of removing overlapping depth intervals will likely not be worthwhile for the limited reduction in computational render cost.

A maximum bound can be set on the number of ranges of depth values that are represented for a grid cell. For instance, with 4 bit it is possible to encode 16 depth classes. Note that it may be necessary to be able to represent the situation that there are no depth classes (i.e. an entire grid cell is transparent) and, thus, in this case, 4 bits can be used to represent no depth classes + 15 depth classes. Using 4 bit encoding, 128x128 pixel grid cells and a 1920x1080 image resolution, there would need to be 15x8x4 = 480 bits per frame to encode the number of depth classes.

The depth intervals themselves can be encoded at e.g., 16-bit precision. Of course, the ranges of depth values can also be encoded differentially over space and or time.

In summary, including the ranges of depth values in the metadata for each cell will add a low bitrate overhead and can be encoded with a comparatively low computational cost.

At the client device, the multi-view textures are received with the corresponding depth map together with the depth intervals per grid cell (as metadata). The decoding itself usually takes place during rendering on the graphics processing unit (GPU). The depth interval can be used both in the vertex and in fragment shader.

In the vertex shader the depth intervals can be used to clip the depth of the mesh vertices inside the range of depth values such that pixels inside the depth region are warped correctly and pixels outside the depth region, but inside the same cell, are not drawn over the depth region.

In the fragment shader, the depth intervals can be used to determine the alpha channel (i.e. transparency values of the textures). If the warped depth lies outside the depth interval, then the corresponding pixel can be set to transparent.

Each time a grid cell for a given depth layer and a given view is rendered, the corresponding depth intervals can be passed to the GPU as shader uniform parameters.

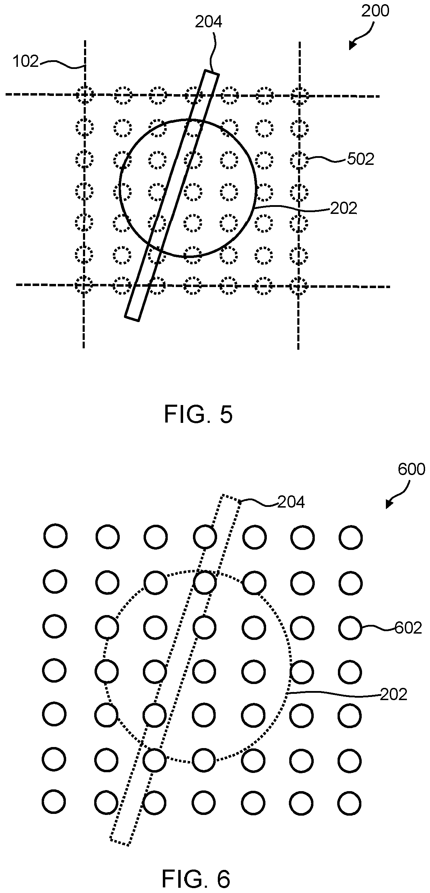

Starting with the vertex shader, low resolution mesh vertices are drawn over the depth map pattern. Fig. 5 shows a low resolution mesh drawn over the cell 200 from Figs. 2 and 3. It is important to realize that a major computation saving is achieved at this point in the rendering. So long as the thin rod 204 is 'hit' by at least one mesh vertex 502, the mesh resolution per grid cell can be further reduced. Fig. 5 shows that at least three vertices 502 hit the thin object for the illustrated low-resolution mesh.

Note that rendering takes place in a back-to-front order. The first depth region drawn is therefore depth region A as shown in Figs. 3 and 4. The vertex shader receives the range of depth values for depth region A and, for all vertices in parallel, clips the sampled vertex depth value in the range of depth values for depth region A. Since there is not much depth variation in depth region A, all vertices will receive almost the same depth value.

Fig. 6 illustrates the mesh 600 drawn for depth region A. Objects 202 and 204 are shown for context. The coordinates/depth values of the vertices 602 are clipped to fall within the range of depth values of depth region A.

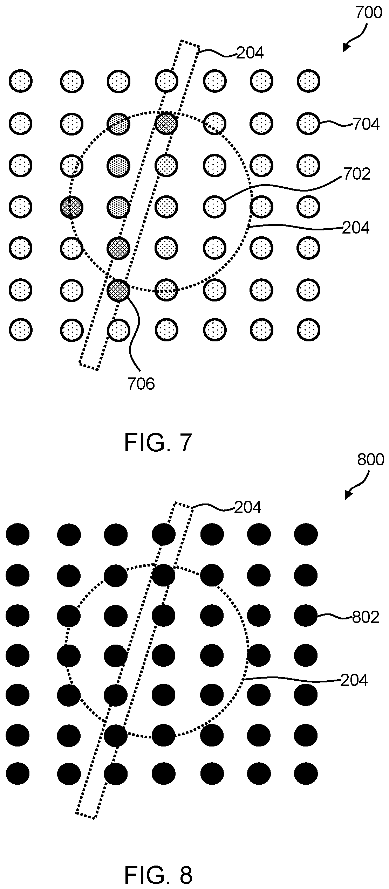

The second depth region that is drawn has label B. Fig. 7 illustrates the mesh 700 drawn for depth region B. Now there is more depth variation due to the depth profile of the circle (illustrated in Fig. 4). However, since the depth variation over the circle varies relatively smoothly over spatial coordinates, a low-resolution mesh still suffices.

In this case, the vertices 702 which are drawn over the circle 202 are given the corresponding depth values of the circle. The vertices 704 which are drawn over the depth region B (i.e. over the background) are clipped to have the maximum depth value in the range of depth values corresponding to depth region B. Similarly, the vertices 706 drawn over the depth region C (i.e. over the rod 204) are clipped to have the minimum depth value in the range of depth values corresponding to depth region B.

Finally, the third class C is drawn. Fig. 8 illustrates the mesh 800 drawn for depth region B. As can be seen, the three samples that 'hit' the rod 204 set the range of depth values to be relatively small (as can be seen for range 406 in Fig. 4) which effectively clips all vertices to the same depth value that corresponds to the depth of the rod 204.

At the vertex shader, the ray-angle difference between the source ray and the target ray can be used to pre-calculate a weight that is passed to the fragment shader. This weight can be coded as transparency and later used for blending over source view contributions.

Calculating the transparency (alpha) for the texture on each mesh can be performed using the range of depth values corresponding to that mesh in combination with the (now warped) higher resolution depth map. Note that inside the cell, alpha is set to the ray-angle weight. In the later blend step over views, alpha (if above a threshold) is interpreted as blend weight for mixing source view contributions and (if below or equal to a threshold) interpreted as alpha and used for compositing over the previously rendered segments.

However, the alpha values can be modified depending on the depth values of the warped depth map compared to the corresponding range of depth values. In particular, inside a cell, if a depth value of the warped depth map is outside the corresponding range of depth values for that pixel, the alpha value can be set to 0 (i.e. transparent). This means that any pixels which are outside the range of depth values are set to transparent. Returning to the mesh of Fig. 8, the texture of the mesh 800 will be transparent at all places apart from the positions where the mesh is drawn on top of the rod 204.

In conclusion, the vertex shader works with a low-resolution mesh for each grid cell, decodes the segmentation information using the ranges of depth values and warps the texture patches to the target viewpoint.

This is not true for the fragment shader. In that case, a new foreground edge is composited with pixel precision over the already drawn scene content. Pixels that are not in the depth interval are set to transparent with the result that the foreground edge is nicely segmented out. To do this, the high-resolution depth map is warped towards the target viewpoint. The fragment shader thresholds the warped high resolution depth map using the ranges of depth values and sets all pixels outside the depth interval to transparent.

Note that the mesh resolution was assumed to be constant and with a lower resolution than the depth map in order to save expensive vertex shader computations. For instance, with a quad size of four pixels, four vertices can represent an image patch of 4x4 = 16 pixels and this entire patch can be warped using two triangles. This is an obvious complexity reduction over having two triangles per pixel which are needed for conventional, depth image-based rendering.

However, computational complexity can be further reduced by making the mesh resolution variable per grid cell. For instance, the grid cells that cover the table in Fig. 1 would only need a single quad to perform an accurate view-point shift (since the table is a plane). This would mean that many grid cells could use only four vertices to warp an entire 128x128 image patch. Grid cells for which the magnitude of the depth smoothness (e.g. first order and/or second order spatial derivatives of the depth map) exceeds a threshold may need more vertices for an accurate warp. Hence, the mesh resolution can be calculated at the production side (i.e. at the encoder before transmission/broadcast) and transmitted as metadata.

This can be achieved, for example, by coding the quad size (expressed in image pixels) per grid cell as an 8-bit number to represent a quad size of 2, 4, 8, 16, 32, etc. pixels. Temporally differential coding of this quad size parameter could also further reduce bitrate since, on average, the depth values in a grid cell will not change very fast.

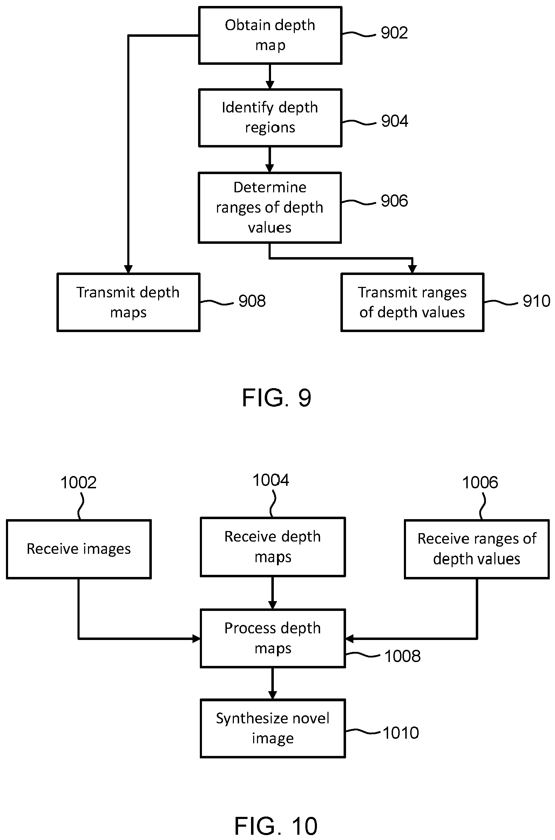

Fig. 9 shows a method for processing depth maps at an encoder. A depth map of a scene is obtained at step 902. For example, a depth sensor may obtain the depth map. Alternatively, the depth map may be generated by calculated disparity vectors between two images of the scene taken from different viewpoints.

Depth regions are identified in the depth map at step 904. The depth regions can be identified using areas of similar and/or smooth depth. For example, depth values may cluster at particular depths, indicating the presence of an object. A depth region is generally indicative of one or more objects in the scene. For example, the depth region may contain pixels with similar depth values in the depth map and/or with relatively smooth depth variation (e.g. using first/second spatial derivatives of the depth map). Of course, conventional segmentation could also be used to identify the depth regions. In this case, the segmentation mask obtained by the segmentation does not need to be transmitted.

Ranges of depth values are determined for the depth regions at step 906. For example, the maximum and the minimum depth values in a depth region can be used to define the range of depth values for that depth region. Of course, other methods may be used to determine the range of depth values (e.g. 5^{th} percentile and 95^{th} percentile of the distribution of depth values).

The depth map and the ranges of depth values can thus be transmitted in steps 908 and 910 respectively. The ranges of depth values provide low bitrate segmentation information for the depth map. A range of depth values can be transmitted together with a coded identification which provides the which pixels correspond to which range of depth values

Fig. 10 shows a method for synthesizing an image at a target viewpoint. Steps 1002, 1004 and 1006 comprise receiving images (texture patches) of a scene, depth maps of the scene and ranges of depth values for the depth map respectively. For example, a client decoder may receive these components from an encoder. The depth maps are then processed using the ranges of depth values and the images.

In a first example, the depth maps and ranges of depth values are used in the vertex shader and/or the fragment shader as discussed above.

In a second example, the depth maps may be warped to a target viewpoint and blended. The resulting depth map can then be modified based on the ranges of depth values (e.g. to avoid any errors due to warping and blending).

In a third example, the decoder may identify to which range of depth values each pixel corresponds by using the depth value at that pixel before warping the depth map. Thus, a pseudosegmentation map can be generated for each depth region, thereby providing a segmentation of the depth regions without having to perform any segmentation at the decoder and without the encoder having to transmit full segmentation maps.

More generally, the ranges of depth values can be used as depth segmentation information in the graphics pipeline used when synthesizing a novel image at a target viewpoint.

The processed depth maps, together with the images can thus be used to synthesize a novel image at the target viewpoint.

The skilled person would be readily capable of developing a processor for carrying out any herein described method. Thus, each step of a flow chart may represent a different action performed by a processor, and may be performed by a respective module of the processor.

As discussed above, the system makes use of a processor to perform the data processing. The processor can be implemented in numerous ways, with software and/or hardware, to perform the various functions required. The processor typically employs one or more microprocessors that may be programmed using software (e.g., microcode) to perform the required functions. The processor may be implemented as a combination of dedicated hardware to perform some functions and one or more programmed microprocessors and associated circuitry to perform other functions.

Examples of circuitry that may be employed in various embodiments of the present disclosure include, but are not limited to, conventional microprocessors, application specific integrated circuits (ASICs), and field-programmable gate arrays (FPGAs).

In various implementations, the processor may be associated with one or more storage media such as volatile and non-volatile computer memory such as RAM, PROM, EPROM, and EEPROM. The storage media may be encoded with one or more programs that, when executed on one or more processors and/or controllers, perform the required functions. Various storage media may be fixed within a processor or controller or may be transportable, such that the one or more programs stored thereon can be loaded into a processor.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

Functions implemented by a processor may be implemented by a single processor or by multiple separate processing units which may together be considered to constitute a "processor". Such processing units may in some cases be remote from each other and communicate with each other in a wired or wireless manner.

The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa.

Any reference signs in the claims should not be construed as limiting the scope.

## Claims

1. A method for processing a depth map for subsequent transmission, the method comprising:
obtaining (902) a depth map of a scene comprising a plurality of depth values;
identifying (904) one or more depth regions in the depth map, wherein each of the one or more depth regions defines a portion of the depth map;
determining (906) one or more ranges of depth values for the one or more depth regions; and
transmitting (908, 910) the depth map and the one or more ranges of depth values.

2. The method of claim 1, further comprising defining a plurality of cells in the depth map, each cell corresponding to a portion of the depth map, wherein identifying one or more depth regions in the depth map comprises identifying one or more depth regions in each of the cells.

3. The method of claim 2, wherein defining a plurality of cells in the depth map comprises dividing the depth map into a grid of cells.

4. The method of claims 2 or 3, further comprising transmitting the number of different ranges of depth values in each cell.

5. The method of claim 4, wherein only 16 or less distinct ranges of depth values are transmitted.

6. The method of any one of claims 1 to 5, wherein identifying one or more depth regions is based on determining a depth smoothness between the depth values of the depth map.

7. The method of claim 6, further comprising:
determining a mesh resolution based on the depth smoothness; and
transmitting the mesh resolution.

8. A method for synthesizing an image at a target viewpoint, the method comprising:
receiving (1002, 1004) at least one or more images and one or more depth maps of a scene;
receiving (1006) one or more ranges of depth values for at least one of the depth maps, wherein each range of depth values corresponds to one or more depth regions in one of the depth maps; and
processing (1008) at least one of the depth maps using the ranges of depth values, together with at least one of the images, to synthesize (1010) an image at the target viewpoint.

9. The method of claim 8, wherein processing at least one depth map comprises rendering the depth regions in the one or more depth maps in a back-to-front depth order.

10. The method of claims 8 or 9, wherein processing at least one of the depth maps comprises:
selecting a mesh for each range of depth values;
applying the depth values of the one or more depth regions corresponding to each range of depth values, from the depth map, to the corresponding mesh;
modifying the position of vertices in each mesh to fit within the corresponding range of depth values; and
synthesizing the image at the target viewpoint using the images and the modified one or more meshes.

11. The method of claim 10, further comprising obtaining a mesh resolution based on a depth smoothness of each of the one or more depth maps, wherein selecting a mesh for each range of depth values is based on the mesh resolution.

12. The method of any one of claims 8 to 10, wherein processing at least one of the depth maps comprises:
warping the one or more depth maps to a target viewpoint;
generating a transparency map using the one or more warped depths maps; and
modifying the transparency values in the transparency map based on the one or more ranges of depth values,
wherein synthesizing the image at the target viewpoint is based on using the one or more warped depth map and the transparency map.

13. The method of any one of claim 8 to 11, further comprising receiving an indication of a number and shape of cells in a grid of cells defined for each of the one or more depth maps, wherein rendering the depth regions comprises separately rendering the depth regions for each cell.

14. A computer program comprising computer program code which, when executed on a processor, causes the processor to perform all of the steps of the method according to any of claims 1 to 7 and/or the method according to any of claims 8 to 13.

15. A processor configured to execute the computer program code of claim 14.
